# EUROPEAN PATENT APPLICATION

(11) **EP 2 410 141 A1**
(43) Date of publication of application: **25.01.2012**
(21) Application number: 09841819.7
(22) Date of filing: 16.03.2009
(51) Int. Cl.: F01N 3/02, F01N 3/24

(54) **EXHAUST GAS PURIFYING SYSTEM**

(71) Applicant: Toyota Jidosha Kabushiki Kaisha, Toyota-shi, Aichi 471-8571 (JP)
(72) Inventor: FUTONAGANE, Yoshinori, Toyota-shi Aichi 471-8571 (JP); HIRAI, Takuya, Toyota-shi Aichi 471-8571 (JP); HAGA, Hiroyuki, Toyota-shi Aichi 471-8571 (JP)
(74) Representative: TBK
(86) International application number: PCT/JP2009/055006
(87) International publication number: WO 2010/106613

(57) **Abstract**

An exhaust gas purification system is provided with an exhaust gas purification device (19) for trapping particulate matter, and a control system that performs a regeneration control process to the exhaust gas purification device (19), wherein in cases where the regeneration control process is interrupted in accordance with stop of an internal combustion engine (10), during the stop of the internal combustion engine (10) (or at the time of starting thereof), the control system determines, based on a temperature (catalyst bed temperature) and an amount of PM deposition of the exhaust gas purification device (19), whether the exhaust gas purification device (19) is in a state where the regeneration control process can not be carried out efficiently, and does not resume the regeneration control process at the time of starting of the internal combustion engine (10), in cases where the exhaust gas purification device (19) is in the state where the regeneration control process can not be carried out efficiently.

## Description

### [TECHNICAL FIELD]

The present invention relates to an exhaust gas purification system which purifies an exhaust gas of an internal combustion engine by removing particulate matter.

### [BACKGROUND ART]

Among exhaust gas purification devices for trapping PM (Particulate Matter) in an exhaust gas of an internal combustion engine, there exists one which is regenerated by a regeneration control process in which fuel is added into the exhaust gas (e.g., an exhaust gas purification device composed of a filter on which a catalyst is supported, an exhaust gas purification device in which an oxidation catalyst is arranged in the preceding stage of a filter, etc.).

And, as an exhaust gas purification system provided with such an exhaust gas purification device, there has been developed one in which, in cases where an internal combustion engine is stopped during the execution of a regeneration control process, the regeneration control process is resumed at the time of the restart of the internal combustion engine, but such a kind of existing exhaust gas purification system is constructed such that the regeneration control process is resumed when the temperature of a catalyst is above an activation temperature thereof (for example, see a fourth patent document).

### [PRIOR ART REFERENCES]

[First Patent Document] Japanese patent application laid-open No. H04-265412 [Second Patent Document] Japanese patent application laid-open No. 2004-132202
[Third Patent Document] Japanese patent application laid-open No. 2004-176602
[Fourth Patent Document] Japanese patent application laid-open No. 2006-291850
[Fifth Patent Document] Japanese patent application laid-open No. H05-195751

### [DISCLOSURE OF THE INVENTION]

### [PROBLEMS TO BE SOLVED BY THE INVENTION]

The present invention has been made in view of the present circumstances as referred to above, and the problem of the present invention is to provide an exhaust gas purification system which is provided with an exhaust gas purification device for trapping particulate matter, and which is capable of regenerating the exhaust gas purification device in a smaller amount of consumption of fuel.

### [MEANS FOR SOLVING THE PROBLEMS]

In order to solve the above-mentioned problem, an exhaust gas purification system according to a first aspect of the present invention is provided with: an exhaust gas purification device for trapping particulate matter in an exhaust gas of an internal combustion engine; a determination means that determines, based on status information including a temperature of said exhaust gas purification device, and an amount of particulate matter remaining in said exhaust gas purification device, whether the state of said exhaust gas purification device is a regeneration unsuitable state where a regeneration control process, which raises the temperature of said exhaust gas purification device thereby to regenerate said exhaust gas purification device by adding fuel into the exhaust gas, can not be carried out in an efficient manner; and a control means that starts, when a prescribed condition is satisfied, the regeneration control process in which the temperature of said exhaust gas purification device is raised to regenerate said exhaust gas purification device by adding fuel into the exhaust gas, and interrupts the regeneration control process in cases where said internal combustion engine is stopped during the execution of the regeneration control process, wherein in cases where it is not determined by said determination means that the state of said exhaust gas purification device is said regeneration unsuitable state at the time of starting of said internal combustion engine after the interruption of the regeneration control process, said control means resumes the regeneration control process, and in cases where it is determined by said determination means that the state of said exhaust gas purification device is said regeneration unsuitable state at the time of starting of said internal combustion engine after the interruption of the regeneration control process, said control means thereafter starts the regeneration control process at the time when said prescribed condition is satisfied.

That is, in cases where the exhaust gas purification system is constructed in such a manner that the regeneration control process is resumed at the time when the temperature of a catalyst exceeds its activation temperature, the regeneration control process may be resumed in a state where the temperature of the catalyst (approximately the temperature of the exhaust gas purification device) is quite low, or in a state where an amount of PM deposition (an amount of the particulate matter in the exhaust gas purification device) is relatively small. Then, in cases where the regeneration control process is resumed in the state where the temperature of the catalyst is quite low, a relatively large amount of fuel will be required for raising the temperature of the exhaust gas purification device to a temperature at which the particulate matter can be oxidized. In addition, when there is a small amount of PM deposition, the oxidation efficiency of the particulate matter will get worse (the rate of oxidation of the particulate matter becomes slow). Accordingly, in cases where the regeneration control process is resumed with a relatively small amount of particulate matter, the oxidation efficiency of the particulate matter is bad, so a relatively large amount of fuel will be required.

In this manner, in the exhaust gas purification system which resumes the regeneration control process at the time when the temperature of the catalyst exceeds its activation temperature, the regeneration control process may be resumed when the exhaust gas purification device is in a state where a large amount of fuel more than an ordinary amount is required for oxidation removal of particulate matter, but the exhaust gas purification system according to the first aspect of the present invention has such a construction that a determination as to whether the regeneration control process should be resumed is made based on status information ("status information including the temperature of said exhaust gas purification device and the amount of particulate matter remaining in said exhaust gas purification device") upon which it is determined whether the state of the exhaust gas purification device is such a state ("regeneration unsuitable state"), and in cases where it is determined that the regeneration control process should not be resumed, the regeneration control process is not resumed (i.e., thereafter, when the prescribed condition is satisfied, the regeneration control process is started).

Accordingly, the exhaust gas purification system according to this first aspect of the present invention can be said to be a system which is able to regenerate the exhaust gas purification device in a smaller amount of consumption of fuel than that in a system which resumes a regeneration control process at the time when the temperature of a catalyst exceeds its activation temperature.

Moreover, an exhaust gas purification system according to a second aspect of the present invention is provided with: an exhaust gas purification device for trapping particulate matter in an exhaust gas of an internal combustion engine; a determination means that determines, based on status information including a stop period of time of said internal combustion engine and an amount of particulate matter remaining in said exhaust gas purification device, whether the state of said exhaust gas purification device is a regeneration unsuitable state where a regeneration control process, which raises the temperature of said exhaust gas purification device thereby to regenerate said exhaust gas purification device by adding fuel into the exhaust gas, can not be carried out in an efficient manner; and a control means that starts, when a prescribed condition is satisfied, the regeneration control process in which the temperature of said exhaust gas purification device is raised to regenerate said exhaust gas purification device by adding fuel into the exhaust gas, and interrupts the regeneration control process in cases where said internal combustion engine is stopped during the execution of the regeneration control process, wherein in cases where it is not determined by said determination means that the state of said exhaust gas purification device is said regeneration unsuitable state at the time of starting said internal combustion engine after the interruption of the regeneration control process, said control means resumes the regeneration control process, and in cases where it is determined by said determination means that the state of said exhaust gas purification device is said regeneration unsuitable state at the time of starting said internal combustion engine after the interruption of the regeneration control process, said control means thereafter starts the regeneration control process at the time when said prescribed condition is satisfied.

In addition, the stop period of time of the internal combustion engine is information which is strongly correlated with the temperature of the exhaust gas purification device at the time of starting of the internal combustion engine. Accordingly, similar to the above-mentioned exhaust gas purification system according to the first aspect of the present invention, the exhaust gas purification system according to this second aspect of the present invention also becomes a system which is able to regenerate the exhaust gas purification device in a smaller amount of consumption of fuel than that in a system which resumes a regeneration control process at the time when the temperature of a catalyst exceeds its activation temperature.

It is in particular preferable that an exhaust gas purification system of the present invention (an exhaust gas purification system according to each aspect of the present invention) be achieved for an internal combustion engine which is frequently stopped and started in a repeated manner, i.e., an internal combustion engine which is mounted on an idle-stop (idle reduction) vehicle, a hybrid vehicle, etc., and which is stopped in an automatic manner. However, an exhaust gas purification system of the present invention also be achieved for an internal combustion engine which is not stopped in an automatic manner (an internal combustion engine of which idling is stopped by a driver with ignition key operation).

Further, when an exhaust gas purification system of the present invention is achieved, it is possible to adopt, as a determination means, a means which functions only at the time of starting of an internal combustion engine, or to adopt a means which functions repeatedly during stop of an internal combustion engine.

As a control means of an exhaust gas purification system of the present invention, there can also be adopted a means which serves to actually measure the temperature of the exhaust gas purification device, or there can also be adopted a means which does not actually measure the temperature of the exhaust gas purification device (a means that estimates the temperature of the exhaust gas purification device from other information).

In addition, it is extremely difficult (practically impossible) to actually measure the amount of particulate matter remaining in the exhaust gas purification device. For that reason, as a control means, in practice, there has to be adopted a means which estimates the amount of the particulate matter remaining in the exhaust gas purification device from an operating state of the internal combustion engine, etc. However, it is considered that in cases where the regeneration control process is interrupted in a repeated manner without being completed, a difference between an estimated value of the amount of particulate matter ("the amount of particulate matter remaining in the exhaust gas purification device" used as an element of the status information), and an amount of particulate matter actually remaining in the exhaust gas purification device becomes large. Then, in cases where the difference between the estimated value of the amount of particulate matter and the amount of particulate matter actually remaining in the exhaust gas purification device becomes large, there can occur a problem that the regeneration control process is not resumed in spite of the fact that an amount of particulate matter for which the regeneration control process should be immediately resumed remains in the exhaust gas purification device. Accordingly, in order to prevent the occurrence of such a problem, it is desirable to adopt, as the control means, "a means which manages, as a number (frequency) of cancellations, a number (frequency) of determinations continuously made that the regeneration control process should not be resumed, and which resumes the regeneration control process when said number of cancellations is equal to or more than a predetermined number of cancellations, even in cases where it is determined, in a determination made based on said status information, that the regeneration control process should not be resumed".

### [EFFECT OF THE INVENTION]

According to the present invention, it is possible to provide an exhaust gas purification system which is provided with an exhaust gas purification device for trapping particulate matter, and which is capable of regenerating the exhaust gas purification device in a smaller amount of consumption of fuel.

### [BRIEF DESCRIPTION OF THE DRAWINGS]

[Fig. 1] is a construction view of an internal combustion engine system to which an exhaust gas purification system according to a first embodiment of the present invention is applied.
[Fig. 2] is a flow chart of a first status monitoring process which is carried out by an electronic control unit (ECU) of the exhaust gas purification system according to the first embodiment.
[Fig. 3] is a view for explaining a regeneration procedure of the exhaust gas purification device carried out by the exhaust gas purification system according to the first embodiment.
[Fig. 4] is a flow chart of a second status monitoring process which is carried out by an electronic control unit (ECU) of an exhaust gas purification system according to a second embodiment.
[Fig. 5] is a flow chart of a third status monitoring process which is carried out by an electronic control unit (ECU) of an exhaust gas purification system according to a third embodiment.
[Fig. 6] is a flow chart of a fourth status monitoring process which is carried out by an electronic control unit (ECU) of an exhaust gas purification system according to a fourth embodiment.

### [BEST MODES FOR CARRYING OUT THE INVENTION]

Hereinafter, embodiments of the present invention will be described in detail with reference to the accompanying drawings.

### < First Embodiment >

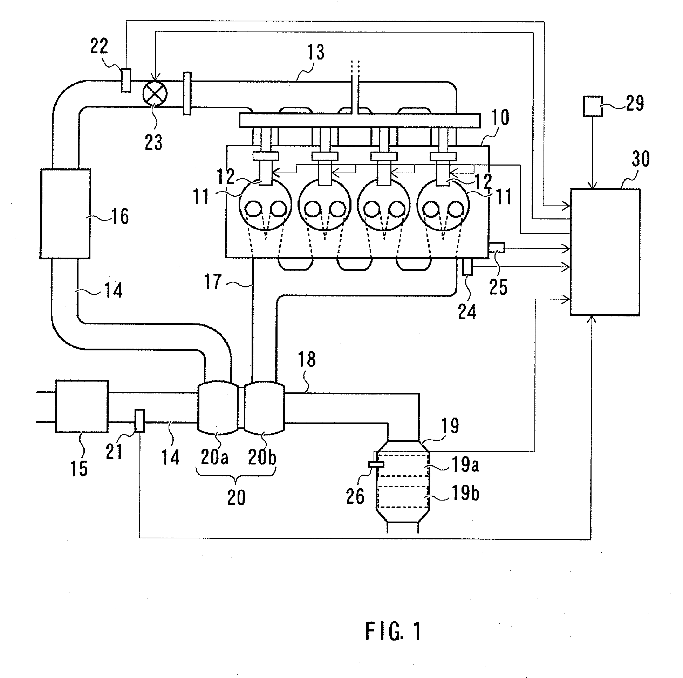

In Fig. 1, there is shown the construction of a vehicular internal combustion engine system to which an exhaust gas purification system according to a first embodiment of the present invention is applied. Here, note that a part in this vehicular internal combustion engine system, which is composed of an exhaust gas purification device 19, a temperature sensor 26, and an ECU 30 (a part which carries out a regeneration control process and a status monitoring process to be described later), corresponds to an exhaust gas purification system according to the first embodiment.

An internal combustion engine (internal combustion engine proper) 10 with which this vehicular internal combustion engine system is provided is a diesel engine having four cylinders 11. On the internal combustion engine 10, there are mounted fuel injection valves 12 for injecting fuel into the cylinders 11, respectively, and intake valves and exhaust valves which are not shown. In addition, a crank position sensor 24 for detecting the number of engine revolutions per unit time and a water temperature sensor 25 for detecting the temperature of cooling water are also mounted on the internal combustion engine 10.

An intake manifold 13, being in communication with a combustion chamber of each cylinder 11 by way of an intake port (illustration omitted), and an exhaust manifold 17, being in communication with the combustion chamber of each cylinder 11 by way of an exhaust port, are connected to the internal combustion engine 10.

An intake passage 14 for introducing air into the intake manifold 13 is connected to the intake manifold 13. An air cleaner 15 for removing dust and dirt from air (intake air) is arranged in an upstream side portion of the intake passage 14. In addition, a compressor housing 20a of a turbocharger 20 and an intercooler 16 for cooling air having passed the compressor housing 20a are arranged in a portion of the intake passage 14 at the downstream side of the air cleaner 15.

An air flow meter 21 for measuring the flow rate of intake air is arranged in a portion of the intake passage 14 between the air cleaner 15 and the compressor housing 20a. In addition, a temperature sensor 22 for measuring the temperature of the intake air flowing through the interior of the intake passage 14, and an intake throttle valve 23 capable of adjusting the flow rate of the intake air flowing through the interior of the intake passage 14 are arranged in a portion of the intake passage 14 at the downstream side of the intercooler 16.

An exhaust passage 18 is connected to the exhaust manifold 17 through a turbine housing 20b of the turbocharger 20. The exhaust gas purification device 19, which has a catalyst 19a (an NOx storage reduction catalyst in this embodiment) and a filter 19b (with the NOx storage reduction catalyst supported thereon in this embodiment) for trapping particulate matter arranged at a downstream side of the catalyst 19a is arranged in the middle of the exhaust passage 18. On this exhaust gas purification device 19, there is mounted the temperature sensor 26 for actually measuring the temperature (hereinafter mentioned as a bed temperature) of the catalyst 19a.

The vehicular internal combustion engine system is also provided with the ECU (electronic control unit) 30 which is a unit to control individual parts (the fuel injection valves 12, the intake valves, the exhaust valves, etc.) of the system in an integrative manner, based on the outputs of the above-mentioned various sensors and the accelerator position sensor 29.

This ECU 30 has a function to stop the operation of the internal combustion engine 10, at the time when a vehicle with the engine 10 mounted thereon is stopped. The ECU 30 also has a function to calculate (estimate) and manage an amount of particulate matter (PM) deposited in the filter 19b (hereinafter mentioned as an amount of particulate matter (PM) deposition) from an operating state of the internal combustion engine 10. In addition, the ECU 30 also has a function to monitor when the amount of PM deposition becomes equal to or more than a prescribed amount α and to change the value of a particulate matter (PM) regeneration request flag (a variable on a memory in the ECU 30) to "ON", at the time when the amount of PM deposition becomes equal to or more than the prescribed amount α.

The ECU 30 also has a function to check in a periodic manner whether a regeneration start condition is satisfied, and to start a regeneration control process at the time when the regeneration start condition is satisfied.

Here, note that the regeneration start condition is a condition which has beforehand been defined as a start condition of the regeneration control process. Although a detailed explanation is omitted, this regeneration start condition is satisfied when the value of the particulate matter regeneration request flag is ON, and when a condition that the internal combustion engine 10 is operated (fuel is combusted in each cylinder 11 of the internal combustion engine 10) is satisfied together with other conditions (a condition with respect to the temperature around the exhaust gas purification device 19).
In addition, the regeneration control process is a process in which the post injection of fuel in a prescribed amount is carried out by each fuel injection valve 12, while updating the amount of PM deposition (decreasing the amount of PM deposition by an amount of particulate matter which is oxidized and removed by the regeneration control process). This regeneration control process is also a process in which the amount of particulate matter actually deposited in the filter 19b becomes substantially "0" at the time of the completion thereof, and at the same time, the amount of PM deposition (the value which the ECU 30 manages as an estimated value of the amount of particulate matter deposited in the filter 19b) becomes "0" at the time of the completion thereof.

The ECU 30 also has a function to change the value of the PM regeneration request flag to "OFF" at the time of the completion of the regeneration control process, and a function to interrupt the regeneration control process without changing the value of the PM regeneration request flag at the time of stopping the operation of the internal combustion engine 10 during (before completion of) the execution of the regeneration control process.

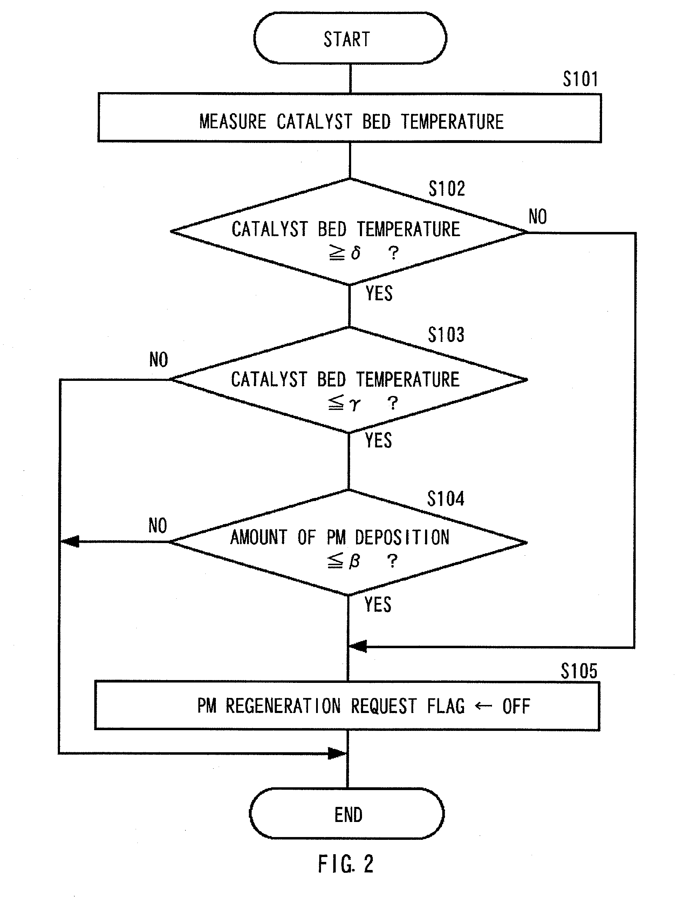

Further, the ECU 30 also has a function to periodically carry out a first status monitoring process, a procedure of which is shown in Fig. 2, in cases where it stops the operation of the internal combustion engine 10 due to stopping of the vehicle, and in cases where the value of the PM regeneration request flag is set to ON.

In other words, the ECU 30, which has stopped the operation of the internal combustion engine 10 due to stopping of the vehicle, comes to a state in which it carries out this first status monitoring process in a periodical manner, in cases where the value of the PM regeneration request flag is set to ON.

When having started the first status monitoring process, the ECU 30 first carries out the processing (step S101) of measuring the catalyst bed temperature (the temperature of the catalyst 19a, and the output of the temperature sensor 26). Subsequently, the ECU 30 determines whether the catalyst bed temperature thus measured is equal to or higher than a catalyst deactivation temperature δ, which has been beforehand set as a temperature below which the catalyst 19a is deactivated (step S102).

Then, in cases where the catalyst bed temperature is less than the catalyst deactivation temperature δ (step S102; NO), the ECU 30 ends this first status monitoring process, after changing the value of the PM regeneration request flag to OFF (step S105). That is, in this case, the ECU 30 decides that the catalyst 19a has already been deactivated (the state of the exhaust gas purification device 19 has changed to a state in which it can not be regenerated in an efficient manner), so it changes the value of the PM regeneration request flag to OFF so as to keep the regeneration control process from being carried out (resumed) by other processing at the time of the restart of the engine.

On the other hand, in cases where the catalyst bed temperature is equal to or higher than the catalyst deactivation temperature δ (step S102; YES), the ECU 30 determines whether the catalyst bed temperature is equal to or lower than a bed temperature threshold value γ, which has been beforehand set as "a temperature that is lower than an ordinary catalyst bed temperature, and is higher than the catalyst deactivation temperature δ"(step S103). Here, note that the ordinary catalyst bed temperature is a catalyst bed temperature in a condition in which the temperatures of the individual parts of the exhaust gas purification device 19 are stable (e.g., a catalyst bed temperature at the time when several minutes have elapsed after starting of the internal combustion engine 10).

In cases where the catalyst bed temperature is equal to or lower than the bed temperature threshold value r (step S103; YES), the ECU 30 determines whether the amount of PM deposition at that time is equal to or less than a deposition amount threshold value β (step S104). Here, the deposition amount threshold value β is a value (an amount of PM deposition) which has been beforehand set as "an amount of PM deposition in which the rate of oxidation of particulate matter does not fall excessively, and the performance of the exhaust gas purification device 19 (the catalyst 19a and the filter 19b) does not get worse in a short time after the restart of the internal combustion engine 10".

Then, in cases where the amount of PM deposition is equal to or less than the deposition amount threshold value β (step S104; YES), the ECU 30 ends the first status monitoring process, after changing the value of the PM regeneration request flag to OFF (step S105). That is, in cases where the catalyst bed temperature is within a range of the bed temperature threshold value δ - the bed temperature threshold value γ and the amount of PM deposition is equal to or less than the deposition amount threshold value β, the ECU 30 decides that the exhaust gas purification device 19 has become a state in which it can not be regenerated in an efficient manner (i.e., a state in which an amount of fuel more than an ordinary amount is required for oxidation removal of particulate matter), and changes the value of the PM regeneration request flag to OFF so as to keep the regeneration control process from being carried out by other processing after the restart of the engine.

In addition, in cases where the catalyst bed temperature is not equal to and lower than the bed temperature threshold value γ (step S103; NO), or in cases where the amount of PM deposition is not equal to and lower than the deposition amount threshold value β (step S104; NO), the ECU 30 ends the first status monitoring process, without changing the value of the PM regeneration request flag. That is, in these cases, the ECU 30 decides that the state of the exhaust gas purification device 19 is not in a state in which it can not be regenerated in an efficient manner, and ends the first status monitoring process without changing the value of the PM regeneration request flag. Then, the ECU 30 carries out the first status monitoring process again after the elapse of a predetermined time.

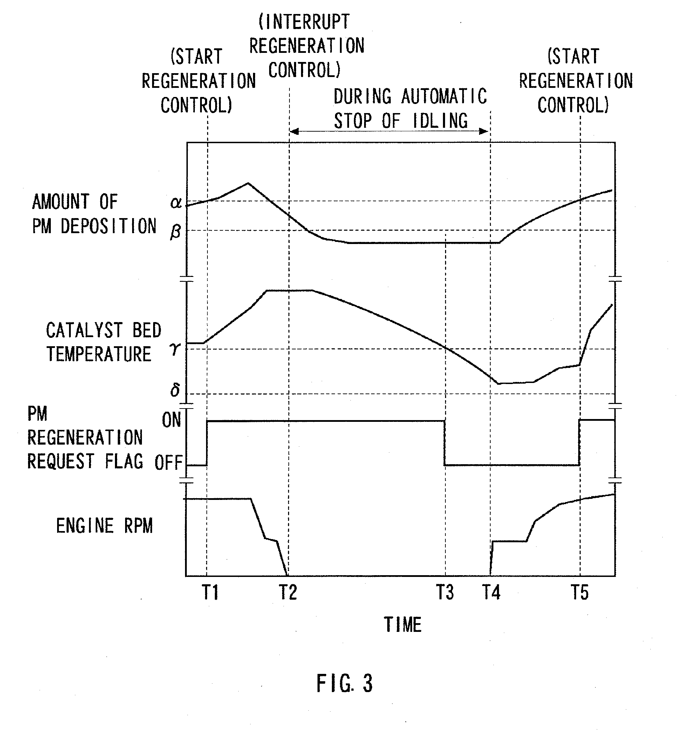

As is clear from the above description, the ECU 30 is configured as a unit that regenerates the exhaust gas purification device 19 in a form as shown in Fig. 3.

In cases where the regeneration start condition is satisfied at a point in time T1 as a result of the fact that the amount of PM deposition ≥ prescribed amount α, etc., is satisfied, the ECU 30 starts the regeneration control process ("regeneration control" in the figure). Then, in cases where there arises a need to stop the operation of the internal combustion engine 10 before the regeneration control process is completed, the ECU 30 interrupts the regeneration control process while stopping the operation of the internal combustion engine 10. Although in Fig. 3, the regeneration control process is to be interrupted at a point in time T2 at which the number of engine revolutions per unit time becomes 0, the time when the ECU 30 according to this embodiment actually interrupts the regeneration control process is the time when the supply of the fuel to be combusted in the cylinders 11 is stopped (i.e., a point in time before the number of engine revolutions per unit time becomes 0).

After that, the ECU 30 becomes a state to repeat (carry out periodically) the first status monitoring process (Fig. 2). Then, in cases where it is detected at a point in time T3 that the catalyst bed temperature has become equal to or lower than the bed temperature threshold valuer γ (step S103; YES), the ECU 30 determines whether the amount of PM deposition is equal to or less than the deposition amount threshold value β (step S104). In the case shown in Fig. 3, the amount of PM deposition becomes equal to or less than the deposition amount threshold value β. For that reason, the ECU 30 changes the value of the PM regeneration request flag to OFF (step S105).

Thereafter, the ECU 30 becomes a state to stand by to wait for an accelerator pedal being operated, and starts the operation of the internal combustion engine 10 when the accelerator pedal is operated at a point in time T4. In addition, the ECU 30 also checks whether the regeneration start condition is satisfied, but the regeneration start condition is not satisfied because the value of the PM regeneration request flag is OFF. For that reason, the ECU 30 does not start the regeneration control process.

Then, at the time when the amount of PM deposition increases in accordance with the operation of the internal combustion engine 10 and, as a result, the regeneration start condition is satisfied (at a point in time T5 in the figure), the ECU 30 starts regeneration control process.

In this manner, in cases where the processing of step S105 in the first status monitoring process is carried out after the interruption of the regeneration control process accompanying the stop of the operation of the internal combustion engine 10 (in cases where the value of the PM regeneration request flag has been written into OFF), the ECU 30 does not resume the regeneration control process at the time of the restart of the internal combustion engine 10, but thereafter starts the regeneration control process when the regeneration start condition is satisfied. Then, the first status monitoring process determines, based on the catalyst bed temperature and the amount of PM deposition, whether the exhaust gas purification device 19 is in a state where an amount of fuel more than the ordinary amount is required for oxidation removal of particulate matter (i.e., a state where the regeneration control process can not be carried out in an efficient manner), and in cases where the exhaust gas purification device 19 is in the state where an amount of fuel more than the ordinary amount is required for oxidation removal of particulate matter, the processing of step S105 is carried out.

Accordingly, the exhaust gas purification system according to this embodiment becomes a system which is able to regenerate the exhaust gas purification device 19 in a smaller amount of consumption of fuel than that in a conventional system which resumes a regeneration control process interrupted in connection with the stop of the operation of an internal combustion engine, at the time when the temperature of a catalyst exceeds its activation temperature.

### < Second Embodiment >

Hereinafter, reference will be made to the construction and function of an exhaust gas purification system according to a second embodiment of the present invention while focusing on parts different from those of the exhaust gas purification system according to the first embodiment, by using the same symbols as those used in the description of the exhaust gas purification system of the first embodiment.

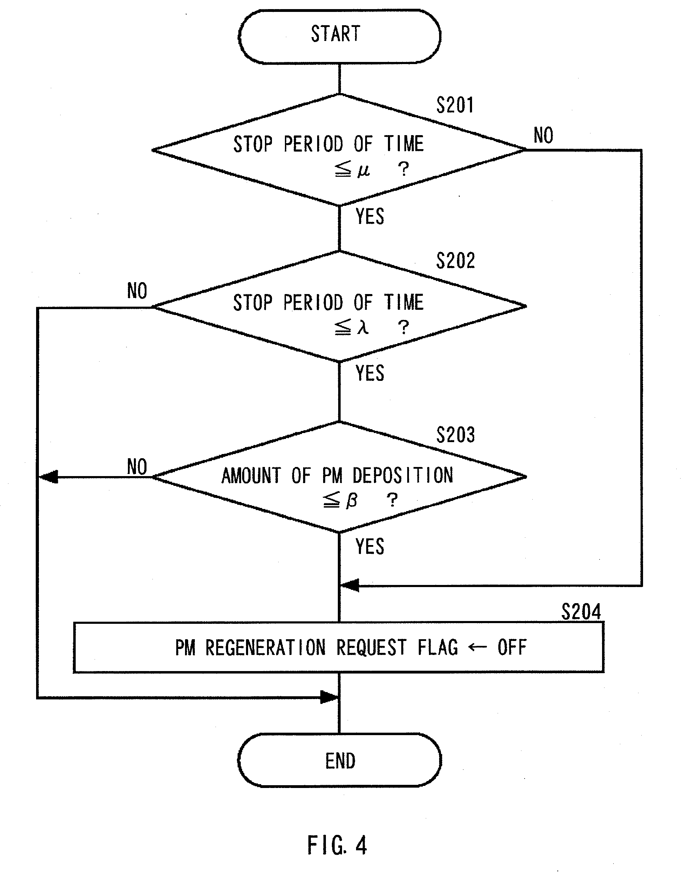

The exhaust gas purification system according to this embodiment is also a system which includes, as its main components, an exhaust gas purification device 19 and an ECU 30 (that portion of the ECU 30 which carries out a regeneration control process, etc.), similar to the exhaust gas purification system according to the first embodiment. However, the exhaust gas purification device 19 of the exhaust gas purification system according to the second embodiment is not provided with a sensor corresponding to the temperature sensor 26 (i.e., the temperature of the catalyst 19a can not be actually measured). In addition, the ECU 30 of the exhaust gas purification system according to second embodiment is configured (programmed) in such a manner that a second status monitoring process, a procedure of which is shown in Fig. 4, is carried out, instead of the above-mentioned first status monitoring process.

That is, the ECU 30 of the exhaust gas purification system according to second embodiment carries out this second status monitoring process in a periodical manner, in cases where the operation of the internal combustion engine 10 is stopped due to stop of the vehicle and the value of the PM regeneration request flag is set to ON.

Then, the ECU 30, which has started the second status monitoring process, first determines whether a stop period of time (a period of time elapsed after the stop of the operation of the internal combustion engine 10 to this time) to the current time is equal to or less than a deactivation determination time µ (step S201). Here, the deactivation determination time µ is a period of time which has been beforehand set as "a time in which the catalyst 19a will usually be deactivated when that time elapses after the operation of the internal combustion engine 10 is stopped".

In cases where the stop period of time is not equal to and less than the deactivation determination time µ (step S201; NO), the ECU 30 ends this second status monitoring process, after changing the value of the PM regeneration request flag to OFF (step S204).

On the other hand, in cases where the stop period of time is equal to or less than the deactivation determination time µ (step S201; YES), the ECU 30 determines whether the stop period of time is equal to or less than a stop time threshold value λ which has been beforehand set as a value (a period of time in which the catalyst bed temperature does not fall excessively) less than the deactivation determination time µ (step S202).

In cases where the stop period of time is equal to or less than the stop time threshold value γ (step S202; YES), the ECU 30 determines whether the amount of PM deposition at that time is equal to or less than the deposition amount threshold value β (step S203). Then, in cases where the amount of PM deposition is equal to or less than the deposition amount threshold value β (step S203; YES), the ECU 30 ends the second status monitoring process, after changing the value of the PM regeneration request flag to OFF (step S204).

In addition, in cases where the stop period of time is not equal to and less than the deactivation determination time λ (step S202; NO), or in cases where the amount of PM deposition is not equal to and less than the deposition amount threshold value β (step S203; NO), the ECU 30 ends the second status monitoring process, without changing the value of the PM regeneration request flag. Then, the ECU 30 carries out the second status monitoring process again after the elapse of a predetermined time.

To sum up, the exhaust gas purification system according to the above-mentioned first embodiment is a system which makes a determination of the state of the exhaust gas purification device 19 (a determination as to whether the exhaust gas purification device 19 is in a state incapable of being efficiently regenerated) based on the catalyst bed temperature (the temperature of the catalyst 19a), but the exhaust gas purification system according to this second embodiment is a system which makes a determination of the state of the exhaust gas purification device 19 based on the stop period of time of the internal combustion engine 10.

Then, since the stop period of time of the internal combustion engine 10 is the information which is strongly correlated with the catalyst bed temperature after the stop of the internal combustion engine 10, the exhaust gas purification system according to this embodiment is also a system which can regenerate the exhaust gas purification device 19 in a smaller amount of consumption of fuel.

### < Third Embodiment >

An exhaust gas purification system (see Fig. 1) according to a third embodiment of the present invention is also a system which includes, as its main components, an exhaust gas purification device 19, which can not actually measure the temperature of a catalyst 19a, and an ECU 30 (that portion of the ECU 30 which carries out a regeneration control process, etc.), similar to the above-mentioned exhaust gas purification system according to the second embodiment.

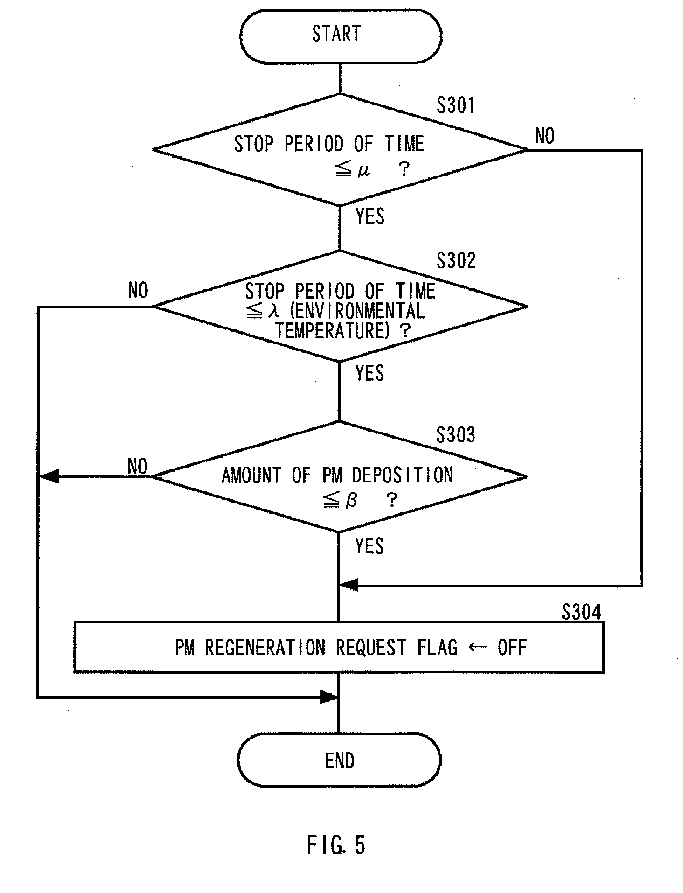

However, a temperature sensor for measuring a temperature in an engine room of a vehicle (hereinafter mentioned as an environmental temperature) is connected to the ECU 30 of the exhaust gas purification system according to the third embodiment. In addition, in the ECU 30, there is set a map (table) for various kinds of temperatures, which stores "the time which is taken for a catalyst bed temperature to fall to a certain temperature (a temperature corresponding to the above-mentioned bed temperature threshold value γ) in cases where the operation of the internal combustion engine 10 is stopped under the condition where the environmental temperature is each of the various kinds of temperatures". Further, the ECU 30 is a unit which is configured (programmed) in such a manner that a third status monitoring process, a procedure of which is shown in Fig. 5, is carried out, instead of the above-mentioned second status monitoring process.

That is, the third status monitoring process which is carried out by the ECU 30 of the exhaust gas purification system according to the third embodiment is basically the same in content as the second status monitoring process (Fig. 4) (i.e., the same processing as in steps S201, S203 and S204 is carried out in steps S301, S303 and S304, respectively). However, the third status monitoring process is a process in which in step S302, a time (hereinafter mentioned as λ (environmental temperature)) associated with an environmental temperature at that point in time is read from the above-mentioned map, and thereafter, it is determined whether the stop period of time of the engine until that point in time is equal to or less than this λ (environmental temperature).

As is clear from the foregoing description, the exhaust gas purification system according to this third embodiment is an improvement of the exhaust gas purification system according to the second embodiment in which a determination of the state of the exhaust gas purification device 19 is made based on the stop period of time of the internal combustion engine 10 and the environmental temperature. Accordingly, the exhaust gas purification system according to this third embodiment becomes a system which is able to regenerate the exhaust gas purification device 19 in a smaller amount of consumption of fuel than that in the exhaust gas purification system according to the second embodiment.

More specifically, the lower the environmental temperature, the earlier the state of the exhaust gas purification device 19 (the temperature of the catalyst 19a) after stop of the operation of the internal combustion engine 10 shifts to a state incapable of being efficiently regenerated (a state where an amount of fuel more than the ordinary amount is required for oxidation removal of particulate matter). Accordingly, in the exhaust gas purification system according to the second embodiment which determines, based solely on the stop period of time of the engine, whether the exhaust gas purification device 19 has become a state incapable of being regenerated efficiently, there may occur a phenomenon in which, in cases where the environmental temperature is greatly different from an ordinary temperature, the regeneration control process will be resumed at the time of the restart of the internal combustion engine 10, in spite of the fact that the exhaust gas purification device 19 has already been in a state incapable of being efficiently regenerated.

On the other hand, the exhaust gas purification system according to this third embodiment is a system which makes a determination of the state of the exhaust gas purification device 19 based on the stop period of time of the internal combustion engine 10 and the environmental temperature, i.e., a system which can exactly determine whether the exhaust gas purification device 19 is in a state incapable of being efficiently regenerated, even if the environmental temperature is greatly different from the ordinary temperature. Accordingly, the exhaust gas purification system according to this third embodiment becomes a system which is able to regenerate the exhaust gas purification device 19 in a smaller amount of consumption of fuel than that in the exhaust gas purification system according to the second embodiment, because of non-occurrence of phenomena as described above.

### < Fourth Embodiment >

Hereinafter, reference will be made to the construction and function of an exhaust gas purification system according to a fourth embodiment of the present invention while focusing on parts different from those of the exhaust gas purification system (Fig. 1) according to the first embodiment.

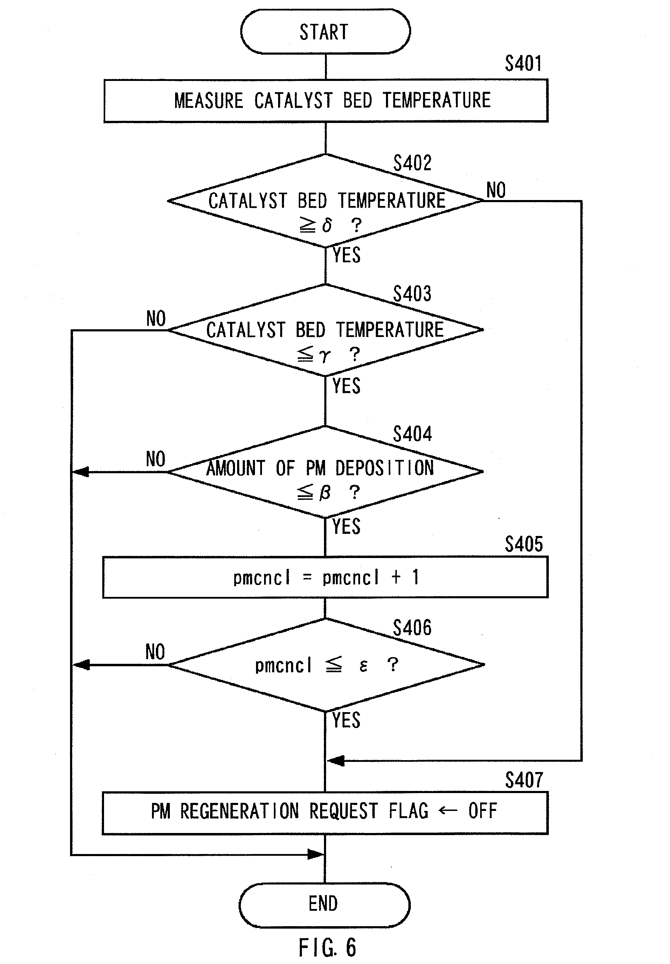

The exhaust gas purification system according to the fourth embodiment is one in which the ECU 30 of the exhaust gas purification system (Fig. 1) according to the first embodiment is reprogrammed in such a manner that a fourth status monitoring process, a procedure of which is shown in Fig. 6, is carried out instead of the first status monitoring process (Fig. 2), and the value of a variable pmcncl is initialized to "0" at the time of the completion of the regeneration control process.

That is, the fourth status monitoring process which is carried out by the ECU 30 of the exhaust gas purification system according to the fourth embodiment is basically the same in content as the first status monitoring process (i.e., the same processing as in steps S101 through S104, and S105 is carried out in steps S401 through S404, and S407, respectively).

However, the fourth status monitoring process is a process in which, in cases where the amount of PM deposition of the fourth status monitoring process is equal to or less than the deposition amount threshold value β (step S404; YES), after "1" is added to the variable pmcncl, it is determined whether the value of the variable pmcncl is equal to or less than a specified value ε (steps S405, S406), and only in cases (step S405: YES) where the value of the variable pmcncl is equal to or less than the specified value ε the value of the PM regeneration request flag is rewritten into OFF.

In the following, reference will be made to the reason for constructing the exhaust gas purification system according to the fourth embodiment as a system in which the ECU 30 carries out the above-mentioned processing.

The amount of PM deposition managed by the ECU 30 is not a measured value of the amount of particulate matter which remains in the exhaust gas purification device 19, but a value which is updated based on the operating state of the internal combustion engine 10 or the execution state of the regeneration control process. For that reason, it is considered that in cases where the regeneration control process is interrupted in a repeated manner, without being completed, errors will be accumulated, and hence the amount of PM deposition will be greatly different from the amount of particulate matter which actually remains in the exhaust gas purification device 19. Then, if the amount of PM deposition is greatly different from the amount of particulate matter which actually remains in the exhaust gas purification device 19, there can occur a phenomenon such as "the regeneration control process being not resumed at the time of the restart of the internal combustion engine 10 in spite of the fact that an amount of particulate matter for which the regeneration control process should be resumed immediately remains in the exhaust gas purification device 19", "the regeneration control process being not started at appropriate timing", etc.

Accordingly, it will be desirable that in order to keep such a phenomenon from occurring, the regeneration control process should be made to carry out to the last, before a difference between the amount of PM deposition and the amount of particulate matter actually remaining in the exhaust gas purification device 19 becomes large to an excessive extent. Then, the rate (probability) at which the regeneration control process will be completed is higher in the case where the regeneration control process is made to resume at the time of the restart of the internal combustion engine 10 than in the case where the regeneration control process is made to start when the regeneration start condition is satisfied again, and hence the exhaust gas purification system according to the fourth embodiment is constructed as a system in which the ECU 30 carries out processing as described above.

### < Fifth Embodiment >

An exhaust gas purification system according to a fifth embodiment of the present invention is a system in which the above-mentioned exhaust gas purification system according to the fourth embodiment is modified in the following manner.

Although the exhaust gas purification system according to the fourth embodiment is a system in which the ECU 30 carries out the fourth status monitoring process (Fig. 6), the exhaust gas purification system according to the fifth embodiment is constructed in such a manner that the ECU 30 carries out a fifth status monitoring process which is a process in which the processing of step S406 is removed from the fourth status monitoring process.

In addition, the ECU 30 of the exhaust gas purification system according to the fourth embodiment is one which stops the operation of the internal combustion engine 10 at the time of the stop of the vehicle, but in cases where the vehicle is stopped during the execution of the regeneration control process, the ECU 30 of the exhaust gas purification system according to the fifth embodiment determines whether the value of the variable pmcncl is equal to or more than a predetermined value, and operates as follows. In cases where the value of the variable pmcncl is less than the predetermined value, the operation of the internal combustion engine 10 is stopped, whereas in cases where the value of the variable pmcncl is equal to or more than the predetermined value, the regeneration control process is continued without stopping the operation of the internal combustion engine 10.

Accordingly, the exhaust gas purification system according to this fifth embodiment is a system which is able to regenerate the exhaust gas purification device 19 in a smaller amount of consumption of fuel, and at the same time, becomes a system which is able to prevent the occurrence of a defect resulting from an error of the amount of PM deposition, in a more reliable manner (in an earlier stage) than the exhaust gas purification system according to above-mentioned the fourth embodiment.

### < Modifications >

The exhaust gas purification system according to each of the above-mentioned embodiments can be modified in a variety of ways. For example, the exhaust gas purification systems according to the first through fourth embodiments can each be modified into a system in which the first through fourth status monitoring processes are carried out (i.e., whether a regeneration control process is to be resumed is decided) at the time of the restart of the internal combustion engine 10. In addition, the exhaust gas purification system according to each of the embodiments can also be modified into a system for hybrid vehicles, or a system for an ordinary vehicular internal combustion engine system (a system in which idling is stopped by operation of an ignition key).

Moreover, it is a matter of course that the exhaust gas purification system according to each of the embodiments may also be modified into a system in which a specific construction and/or procedure is different from those as mentioned above (e.g., a system which is provided with the exhaust gas purification device 19 composed only of the filter 19b, a system in which the temperature of a downstream portion of the catalyst 19a is used as a catalyst bed temperature, a system in which a regeneration control process is continued while the crankshaft of the internal combustion engine 10 is rotating, even at the time when the operation of the internal combustion engine 10 is stopped, and a system which carries out, as a regeneration control process, processing in which fuel injection is carried out from a dedicated fuel injection valve).

### [Industrial Applicability]

The present invention relates to an exhaust gas purification system which purifies an exhaust gas of an internal combustion engine by removing particulate matter, and can be made use of for the removal of particulate matter from exhaust gases of a variety of internal combustion engines.

### [EXPLANATION OF REFERENCE NUMERALS AND CHARACTERS]

- 10: internal combustion engine
- 11: cylinders
- 12: fuel injection valves
- 13: intake manifold
- 14: intake passage
- 15: air cleaner
- 16: intercooler
- 17: exhaust manifold
- 18: exhaust passage
- 19: exhaust gas purification device
- 19a: catalyst
- 19b: filter
- 20: turbocharger
- 20a: compressor housing
- 20b: turbine housing
- 21: air flow meter
- 22, 26: temperature sensors
- 23: intake throttle valve
- 24: crank position sensor
- 25: water temperature sensor
- 29: accelerator position sensor
- 30: ECU

## Claims

1. An exhaust gas purification system **characterized by** comprising:
an exhaust gas purification device for trapping particulate matter in an exhaust gas of an internal combustion engine;
a determination means that determines, based on status information including a temperature of said exhaust gas purification device and an amount of particulate matter remaining in said exhaust gas purification device, whether the state of said exhaust gas purification device is a regeneration unsuitable state where a regeneration control process, which raises the temperature of said exhaust gas purification device thereby to regenerate said exhaust gas purification device by adding fuel into the exhaust gas, can not be carried out in an efficient manner; and
a control means that starts, when a prescribed condition is satisfied, the regeneration control process in which the temperature of said exhaust gas purification device is raised to regenerate said exhaust gas purification device by adding fuel into the exhaust gas, and interrupts the regeneration control process in cases where said internal combustion engine is stopped during the execution of the regeneration control process, wherein in cases where it is not determined by said determination means that the state of said exhaust gas purification device is said regeneration unsuitable state at the time of starting of said internal combustion engine after the interruption of the regeneration control process, said control means resumes the regeneration control process, and in cases where it is determined by said determination means that the state of said exhaust gas purification device is said regeneration unsuitable state at the time of starting of said internal combustion engine after the interruption of the regeneration control process, said control means thereafter starts the regeneration control process at the time when said prescribed condition is satisfied.

2. An exhaust gas purification system **characterized by** comprising:
an exhaust gas purification device for trapping particulate matter in an exhaust gas of an internal combustion engine;
a determination means that determines, based on status information including a stop period of time of said internal combustion engine and an amount of particulate matter remaining in said exhaust gas purification device, whether the state of said exhaust gas purification device is a regeneration unsuitable state where a regeneration control process, which raises the temperature of said exhaust gas purification device thereby to regenerate said exhaust gas purification device by adding fuel into the exhaust gas, can not be carried out in an efficient manner; and
a control means that starts, when a prescribed condition is satisfied, the regeneration control process in which the temperature of said exhaust gas purification device is raised to regenerate said exhaust gas purification device by adding fuel into the exhaust gas, and interrupts the regeneration control process in cases where said internal combustion engine is stopped during the execution of the regeneration control process, wherein in cases where it is not determined by said determination means that the state of said exhaust gas purification device is said regeneration unsuitable state at the time of starting of said internal combustion engine after the interruption of the regeneration control process, said control means resumes the regeneration control process, and in cases where it is determined by said determination means that the state of said exhaust gas purification device is said regeneration unsuitable state at the time of starting of said internal combustion engine after the interruption of the regeneration control process, said control means thereafter starts the regeneration control process at the time when said prescribed condition is satisfied.

3. The exhaust gas purification system as set forth in claim 1 or claim 2, **characterized in that**
said control means is
a means which manages, as the number of cancellations, the number of determinations continuously made that the regeneration control process should not be resumed, and at the same time,
a means which resumes the regeneration control process when said frequency of cancellations is equal to or more than a predetermined number of cancellations, even in cases where it is determined by said determination means that the state of said exhaust gas purification device is said regeneration unsuitable state.

4. The exhaust gas purification system as set forth in any of claim 1 through claim 3, **characterized in that**
said internal combustion engine is an internal combustion engine which is mounted on a vehicle and which is automatically stopped at the time when said vehicle is stopped.
